# FASCICULE DE BREVET EUROPEEN

(11) **EP 3 788 661 B1**
(45) Date de publication et mention de la délivrance du brevet: **26.02.2025**
(21) Numéro de dépôt: 19722046.0
(22) Date de dépôt: 30.04.2019
(51) Int. Cl.: H01M 50/262, H01M 50/244, H01M 50/249

(54) **DISPOSITIF DE FIXATION D'UNE BATTERIE 12V SUR UN SUPPORT DE BATTERIE, ET VÉHICULE AUTOMOBILE COMPRENANT UN TEL DISPOSITIF**
VORRICHTUNG ZUM BEFESTIGEN EINER 12V-BATTERIE AN EINEM BATTERIEHALTER UND KRAFTFAHRZEUG MIT EINER SOLCHEN VORRICHTUNG
DEVICE FOR ATTACHING A 12V BATTERY TO A BATTERY SUPPORT, AND MOTOR VEHICLE COMPRISING SUCH A DEVICE

(30) Priorité: 04.05.2018 FR 1853862
(43) Date de publication de la demande: 10.03.2021
(73) Titulaire: Ampere SAS, 92100 Boulogne-Billancourt (FR)
(72) Inventeur: GUICHART, Laurent, 78720 CERNAY LA VILLE (FR); GUIGNARD, Fabrice, 78280 GUYANCOURT (FR)
(74) Mandataire: Renault Group
(86) Numéro de dépôt international: PCT/EP2019/061018
(87) Numéro de publication internationale: WO 2019/211266

(56) Documents cités:
- FR-A1- 2 377 708
- JP-U- H0 179 263
- US-A- 3 557 895

## Description

La présente invention concerne le domaine de la fixation des batteries 12V dans un véhicule automobile.

De nos jours, les batteries 12V pour véhicule automobile, de format standard européen, sont fixées soit par leur base, avec une bride de fixation en appui sur la zone en forme de talon de la batterie, soit par le dessus de la batterie avec une bride de fixation entourant la partie supérieure de la batterie et fixée au moyen d'écrous et tirants serrés sur un support.

Toutefois, il est important que la bride de fixation de la batterie ne soit pas en appui sur certains endroits de la partie supérieure, notamment sur certaines zones dites « fragiles » du couvercle de la batterie qui comporte généralement des systèmes de dégazage.

Ainsi, il y a toujours un jeu entre la bride de fixation et la zone fragile du couvercle.

On peut se référer au document FR 2 963 480 - A1 qui décrit un système de fixation d'une batterie 12V de type sangle.

On connait également les documents FR2377708, US 5, 222, 711 et document US 5, 052, 198 qui décrivent des systèmes de fixation d'une batterie.

Toutefois, de telles solutions sont particulièrement encombrantes, notamment sur les côtés de la batterie 12V.

De plus, ces documents ne concernent pas la fixation d'une batterie 12V ayant des dimensions aux normes européennes.

Le volume disponible latéralement autour de la batterie est de plus en plus réduit dans les véhicules automobiles actuels, de sorte que les solutions actuelles de fixation de la batterie par le dessus ne peuvent plus être implantées par manque de place.

Il existe un besoin de réduire les dimensions des fixations des batteries 12V dans les véhicules automobiles.

L'objectif de l'invention est donc de développer un système de fixation d'une batterie 12V compacte, capable de rattraper les variations de hauteur des batteries.

L'invention a pour objet un ensemble batterie 12 V, support de batterie et dispositif de fixation comprenant une bride de fixation entourant au moins une partie de la batterie, et notamment son couvercle, et un tirant de fixation monté entre la bride de fixation et le support de batterie et capable de transmettre un effort de précontrainte à ladite bride de fixation par un système de vis/écrou d'axe vertical.

La bride de fixation comprend un caisson de réception du tirant et le tirant comporte une première extrémité inférieure fixée au support de batterie et une deuxième extrémité supérieure en équerre, suivant l'axe axial de la batterie, logée dans un logement intérieur du caisson et fixée audit caisson par le système de vis/écrou.

L'axe dudit système de vis/écrou est contenu dans l'encombrement latéral de la batterie.

Avantageusement, la bride de fixation comprend une découpe permettant le passage d'un outil de serrage pour serrer la bride de fixation avec le tirant.

Le caisson se présente, par exemple, sous la forme d'un compartiment creux délimité au moins par une cloison supérieure, sensiblement plane et horizontale, et deux cloisons latérales, sensiblement planes et verticales, s'étendant chacune à partir d'une extrémité de ladite cloison supérieure, les cloisons délimitant entre elles le logement intérieur de réception du tirant.

Le caisson peut également comprendre une cloison inférieure, sensiblement horizontale et plane, reliée aux cloisons latérales.

La cloison inférieure permet la fermeture de la partie inférieure du logement et ainsi de renforcer la bride de fixation. De plus, cette cloison inférieure permet d'éviter le contact de la vis de fixation avec la surface latérale du couvercle lors du vissage.

Le caisson peut également comprendre une cloison transversale, sensiblement verticale et plane, de fermeture du logement intérieur. Cette cloison de fermeture permet de renforcer la bride de fixation.

Le tirant peut être ici monté dans le logement par le dessous du caisson.

Dans cet exemple, les parties latérales inférieures de la bride de fixation dépassent légèrement de quelques millimètres, latéralement au-delà des surfaces latérales de la batterie et notamment du couvercle.

Avantageusement, la cloison supérieure du caisson comprend un orifice traversant, d'axe vertical, de réception d'une vis de fixation du système de vis/écrou. Ainsi, une fois la bride de fixation montée sur la batterie, l'axe vertical de l'orifice est contenu dans l'encombrement de la batterie.

Selon un mode de réalisation, le système vis/écrou comprend la vis de fixation solidaire du tirant et un écrou vissé sur ladite vis, ladite vis comprenant une tête de la vis fixée, par exemple par soudage ou collage, sur la surface inférieure de l'extrémité supérieure en équerre du tirant et une partie filetée s'étendant au travers l'orifice du caisson au-delà de la cloison supérieure et coopérant avec l'écrou.

Le tirant est ainsi monté dans le caisson de la bride de fixation par guidage des plots de guidage dans les rainures correspondantes, puis l'écrou du système vis/écrou est vissé par le dessus sur la partie filetée de la vis jusqu'à venir en appui sur la surface supérieure de la cloison supérieure du caisson.

Dans ce cas, il est avantageux de prévoir une cloison inférieure du caisson afin de protéger le couvercle de la batterie de l'extrémité de la vis, notamment en cas d'utilisation de vis de grande dimension.

Selon un autre mode de réalisation, le système vis/écrou comprend la vis de fixation et un écrou solidaire du tirant, ledit écrou étant fixé, par exemple par soudage ou collage, sur la surface inférieure de la cloison supérieure du caisson et coopérant par vissage avec la vis.

Le tirant est monté dans le caisson de la bride de fixation par guidage des plots de guidage dans les rainures correspondantes, puis, la vis du système vis/écrou est vissée par le dessus sur l'écrou jusqu'à ce que la tête de vis vienne en appui sur la surface supérieure de la cloison supérieure du caisson.

Grace à la fixation de l'écrou sur le tirant, la vis est logée dans le caisson et ne s'étend donc pas au-delà dudit caisson.

Selon l'invention, le caisson comprend des moyens de guidage du tirant dans le logement intérieur coopérant avec des plots de guidage correspondants prévus sur ledit tirant.

Selon un mode de réalisation, les moyens de guidage du caisson comprennent au moins deux zones embouties vers l'extérieur du caisson formant respectivement une rainure sensiblement verticale.

Selon un autre mode de réalisation, les moyens de guidage du caisson comprennent deux zones supplémentaires embouties vers l'extérieur du caisson formant respectivement une rainure sensiblement horizontale prolongée par la rainure sensiblement verticale.

Le tirant peut être ici monté dans le logement par le côté latéral du caisson, en suivant un premier mouvement horizontal puis un deuxième mouvement vertical.

Dans cet exemple, les parties latérales inférieures de la bride de fixation ne dépassent pas latéralement au-delà des surfaces latérales de la batterie et notamment du couvercle, ce qui permet d'avoir un encombrement réduit de la bride de fixation.

Les moyens de guidage sont, par exemple, pratiqués sur chacune des cloisons latérales du caisson.

Le tirant peut être ici monté dans le logement par le dessous du caisson.

Dans cet exemple, les parties latérales inférieures de la bride de fixation ne dépassent pas latéralement au-delà des surfaces latérales de la batterie et notamment du couvercle, ce qui permet d'avoir un encombrement réduit de la bride de fixation.

Avantageusement, le tirant comporte une portion centrale sensiblement, verticale et plane, s'étendant entre le support de batterie et la bride de fixation, la portion centrale comprenant la première extrémité inférieure, recourbée vers l'extérieur sous la forme d'un crochet, fixée au support de batterie, notamment dans une encoche adaptée, et la deuxième extrémité supérieure en équerre s'étendant suivant l'axe axial vers la batterie.

Par exemple, la deuxième extrémité supérieure du tirant comprend, sur chacun de ses côtés latéraux, un plot de guidage coopérant avec la rainure de guidage correspondante.

Le tirant peut comprendre également un moyen de renfort sous la forme d'une équerre de renfort, par exemple comprenant une ou deux équerres de renfort reliant la deuxième extrémité supérieure à la portion centrale.

La portion centrale du tirant comprend avantageusement un renfort s'étendant en direction opposée à la batterie. Ledit renfort se présente, par exemple, sous la forme d'un emboutissage créant une surépaisseur de la portion centrale dirigée en direction opposée de la batterie.

Le tirant peut être recouvert d'un revêtement isolant. Ainsi, on évite tout risque de court-circuit avec la batterie.

Selon un mode de réalisation, le dispositif de fixation comprend un dispositif isolant électriquement monté entre la bride de fixation et le tirant, au niveau du système vis/écrou et comprend un orifice traversant pour le passage de la vis.

Le dispositif isolant est, par exemple, monté entre la surface supérieure de la cloison supérieure du caisson et l'écrou de serrage ou la vis. Dans ce dernier exemple, le dispositif isolant comprend un conduit vertical inséré dans l'orifice du caisson et dans lequel est pratiqué l'orifice traversant.

Le tirant peut également comprendre, à proximité de son extrémité inférieure, un ergot transversal apte à coopérer avec une patte de maintien verticale prévue sur le support de batterie.

Ainsi, le tirant est retenu et ne peut pas tomber à l'horizontale, ce qui facilite le montage du dispositif de fixation.

Par exemple, la bride de fixation comprend une partie centrale supérieure, sensiblement horizontale et plane, disposée au-dessus de la batterie, et notamment de la surface centrale du couvercle de la batterie, tout en laissant subsister un jeu vertical avec la surface supérieure de la batterie. La bride de fixation comprend en outre une partie verticale s'étendant à partir de chacune des extrémités de la partie centrale verticalement vers une surface latérale correspondante du couvercle de la batterie, chacune des parties verticales étant prolongée par une partie latérale inférieure, sensiblement horizontale et plane, en appui sur une surface latérale du couvercle, le caisson de réception du tirant étant réalisé sur chacune des parties latérales inférieures de la bride de fixation.

Ainsi, le décroché selon l'axe vertical entre la partie centrale supérieure et les parties latérales inférieures correspond au décroché selon l'axe vertical entre la surface centrale et les surfaces latérales du couvercle.

La découpe est, par exemple, réalisée dans la partie centrale supérieure et la partie verticale de la bride de fixation.

La bride de fixation est réalisée, par exemple, par emboutissage d'une tôle métallique.

Le tirant est réalisé, par exemple, par emboutissage d'une tôle métallique.

Selon un deuxième aspect, l'invention concerne un véhicule automobile comprenant une batterie 12V comportant un support de batterie et un dispositif de fixation de la batterie sur le support de batterie tel que décrit précédemment.

Avantageusement, la batterie comprend une partie inférieure logée dans le support de batterie et une partie supérieure recouverte par un couvercle de protection comportant une surface centrale, sensiblement horizontale, dite « fragile », recouvrant des éléments sensibles de la batterie et sur laquelle il est important de ne pas transmettre d'efforts et deux surfaces latérales, sensiblement horizontales, s'étendant latéralement de part et d'autre de la surface centrale et reliées respectivement à la surface centrale par une surface sensiblement verticale. Chacune des parties verticales de la bride de fixation est en appui axial sur la surface verticale correspondante du couvercle et chacune des parties latérales inférieures de la bride de fixation est en appui sur la surface latérale du couvercle.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente en perspective une batterie fixée sur un support de batterie par un dispositif de fixation selon un mode de réalisation de l'invention ;
- la figure 2 illustre un détail de la figure 1 ;
- les figures 3a, 3b et 3c illustrent une bride de fixation d'un dispositif de fixation selon des modes de réalisation différents ;
- la figure 4a représente un tirant d'un dispositif de fixation selon un mode de réalisation ;
- la figure 4b représente l'assemblage d'une bride de fixation avec le tirant de la figure 4a ;
- la figure 5a représente un tirant d'un dispositif de fixation selon un autre mode de réalisation ;
- la figure 5b représente l'assemblage d'une bride de fixation avec le tirant de la figure 5a ;
- les figures 6a et 6b sont des vues en coupe du tirant selon la figure 5a selon deux modes de réalisation ;
- la figure 7a représente une vue en coupe de l'assemblage d'une bride de fixation avec le tirant de la figure 4a comprenant un dispositif d'isolation électrique ;
- la figure 7b représente une vue en coupe de l'assemblage d'une bride de fixation avec le tirant de la figure 5a comprenant un dispositif d'isolation électrique ; et
- les figures 8a et 8b représentent respectivement une vue de face et une vue de côté de l'extrémité inférieure d'un tirant selon l'invention fixée au support de batterie.

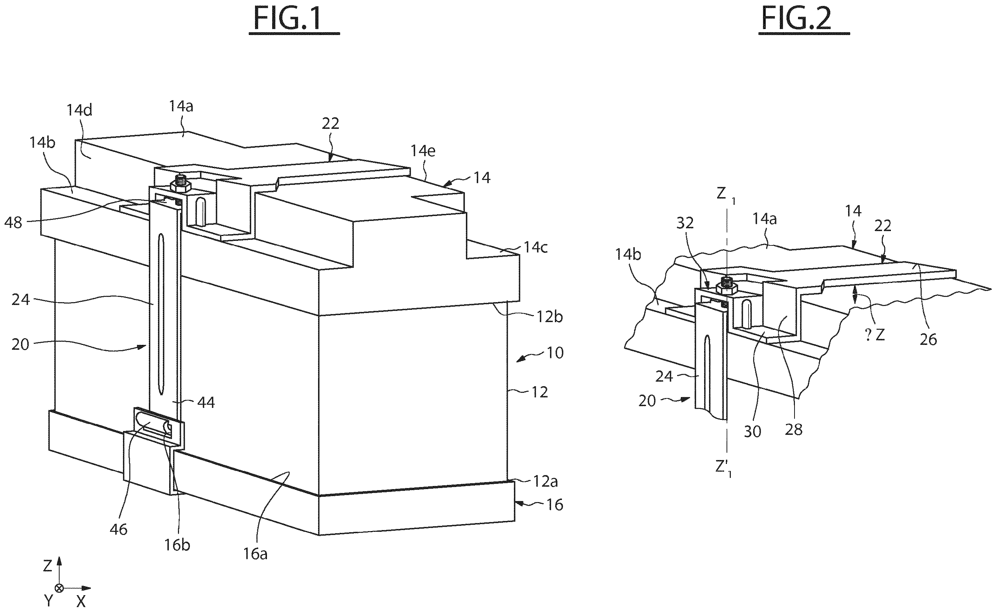

Telle qu'illustrée sur la figure 1, une batterie 12V, référencée 10 dans son ensemble, est destinée à être intégrée dans un véhicule (non représenté) nécessitant l'utilisation d'une batterie 12V, tel que par exemple, un véhicule automobile, un véhicule maritime, un engin aérien, un train, etc...

La batterie 10 comprend un corps 12 de forme générale parallélépipédique comportant une partie inférieure 12a et une partie supérieure 12b. La partie supérieure 12b de la batterie est recouverte par un couvercle 14 de protection. Le couvercle 14 comprend une surface centrale 14a sensiblement horizontale dite « fragile », recouvrant des éléments sensibles de la batterie 10 et sur laquelle il est important de ne pas transmettre d'efforts. Le couvercle 14 comprend en outre deux surfaces latérales 14b, 14c sensiblement horizontales s'étendant latéralement de part et d'autre de la surface centrale 14a. Les surfaces latérales 14b, 14c sont disposées horizontalement en dessous de la surface centrale 14a, de sorte que la surface centrale 14a est reliée respectivement aux surfaces latérales 14b, 14c par une surface sensiblement verticale 14d, 14e s'étendant verticalement vers la partie inférieure 12a de la batterie 10.

La batterie 10 est disposée dans un support de batterie 16 de forme générale parallélépipédique délimitant une cavité 16a pour loger la partie inférieure 12a de la batterie 10.

Afin d'éviter tout mouvement de la batterie 10 dans le véhicule, et notamment dans le support de batterie 16, un dispositif de fixation 20 vient entourer ladite batterie 10 pour la fixer audit support de batterie 16.

Tel qu'illustré sur les figures 1 et 2, le dispositif de fixation 20 de la batterie 10 sur le support de batterie 16 comprend une bride de fixation 22 entourant une partie du couvercle 14 et un tirant de fixation 24 monté entre la bride de fixation 22 et le support de batterie 16 et capable de transmettre un effort de précontrainte à ladite bride de fixation 22.

La bride de fixation 22 est symétrique par rapport à l'axe de symétrie de la batterie 10. Par soucis de clarté, seule une partie de la bride de fixation 22 sera décrite dans la suite de la description.

La bride de fixation 22 comprend une partie centrale supérieure 26 sensiblement horizontale et plane, disposée au-dessus de la surface centrale 14a du couvercle 14 de la batterie 10, tout en laissant subsister un jeu vertical ΔZ entre ladite surface centrale 14a et ladite partie centrale supérieure 26.

La bride de fixation 22 comprend en outre une partie verticale 28 s'étendant à partir de chacune des extrémités de la partie centrale 26 verticalement vers la surface latérale 14b, 14c du couvercle 14.

Chacune des parties verticales 28 de la bride de fixation 22 est prolongée par une partie latérale inférieure 30, sensiblement horizontale et plane, en appui sur la surface latérale 14b, 14c du couvercle 14.

Ainsi, le décroché selon l'axe vertical Z entre la partie centrale supérieure 26 et les parties latérales inférieures 30 suit au décroché selon l'axe vertical Z entre la surface centrale 14a et les surfaces latérales 14b, 14c du couvercle 14.

Chaque partie latérale inférieure 30 de la bride de fixation 22 comprend un caisson 32 de réception du tirant 24.

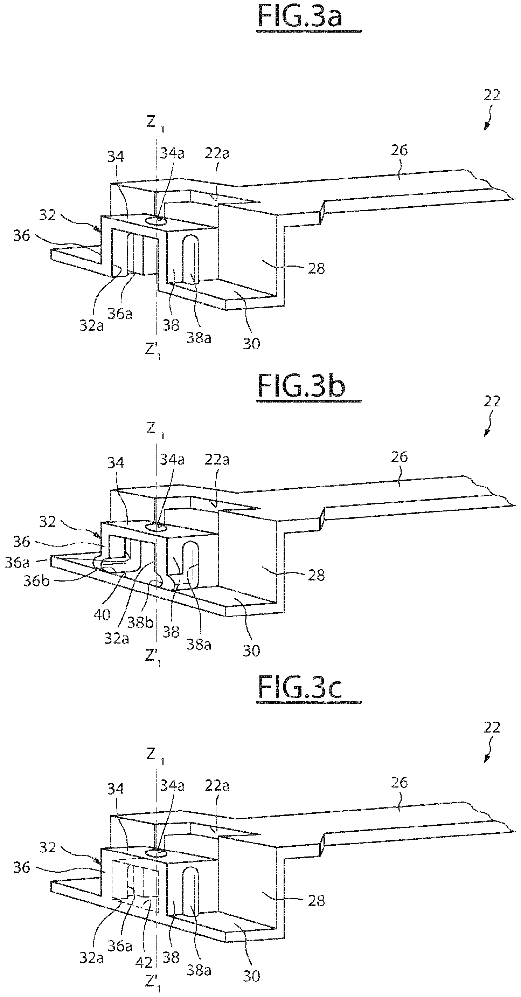

Trois exemples de caisson 32 sont illustrés sur les figures 3a, 3c, et 3c.

Sur la figure 3a, le caisson 32 se présente sous la forme d'un compartiment creux délimité par une cloison supérieure 34, sensiblement plane et horizontale, et deux cloisons latérales 36, 38, sensiblement planes et verticales, s'étendant chacune à partir d'une extrémité de ladite cloison supérieure 34. Les cloisons 34, 36, 38 délimitent entre elles un logement 32a dans lequel est inséré le tirant 24.

La cloison supérieure 34 comprend un orifice 34a, d'axe Z1-Z1', traversant apte à recevoir une vis de fixation 17 d'un système de vis/écrou 18 qui sera décrit ultérieurement. Une fois la bride de fixation 22 montée sur la batterie 10, l'axe Z1-Z1' de l'orifice 34a est contenu dans l'encombrement de la batterie 10.

Chacune des cloisons latérales 36, 38 comprend un moyen de guidage 36a, 38a du tirant 24. Tel qu'illustré sur la figure 3a, les moyens de guidage 36a, 38a se présentent sous la forme d'une zone emboutie vers l'extérieur du caisson 32 formant une rainure verticale sur la cloison latérale 36, 38 correspondante.

Dans cet exemple, le tirant 24 est monté dans le logement 32a par le dessous du caisson 32.

Dans cet exemple, les parties latérales inférieures 30 de la bride de fixation 22 ne dépassent pas latéralement au-delà des surfaces latérales 14b, 14c du couvercle 14, ce qui permet d'avoir un encombrement réduit de la bride de fixation 22.

Le mode de réalisation de la figure 3b, dans lequel les mêmes éléments portent les mêmes références, diffère du mode de réalisation de la figure 3a uniquement par le fait que le caisson 32 comprend une cloison inférieure 40, sensiblement horizontale et plane, reliée aux cloisons latérales 36, 38. La cloison inférieure 40 permet la fermeture de la partie inférieure du logement 32a et ainsi de renforcer la bride de fixation 22. De plus, cette cloison inférieure 40 permet d'éviter le contact de la vis de fixation 17 avec la surface latérale 14b, 14c du couvercle 14 lors du vissage de ladite vis de fixation 17.

Dans ce mode de réalisation, les moyens de guidage se présentent sous la forme d'une première rainure horizontale d'accès 36b, 38b, prolongée par la deuxième rainure verticale 36a, 38a s'étendant vers la cloison supérieure 34. Le tirant 24 est monté dans le logement 32a par le côté latéral du caisson 32, en suivant un premier mouvement horizontal puis un deuxième mouvement vertical.

Dans cet exemple, les parties latérales inférieures 30 de la bride de fixation 22 ne dépassent pas latéralement au-delà des surfaces latérales 14b, 14c du couvercle 14, ce qui permet d'avoir un encombrement réduit de la bride de fixation 22.

Le mode de réalisation de la figure 3c, dans lequel les mêmes éléments portent les mêmes références, diffère du mode de réalisation de la figure 3a uniquement par le fait que le caisson comprend une cloison transversale 42, sensiblement verticale et plane, de fermeture du logement 32a. Cette cloison de fermeture 42 permet de renforcer la bride de fixation 22.

Dans cet exemple, le caisson 34 est dépourvu de cloison inférieure et le tirant 24 est monté dans le logement 32a par le dessous du caisson 32.

Dans cet exemple, les parties latérales inférieures 30 de la bride de fixation 22 dépassent légèrement de quelques millimètres, latéralement au-delà des surfaces latérales 14b, 14c du couvercle 14.

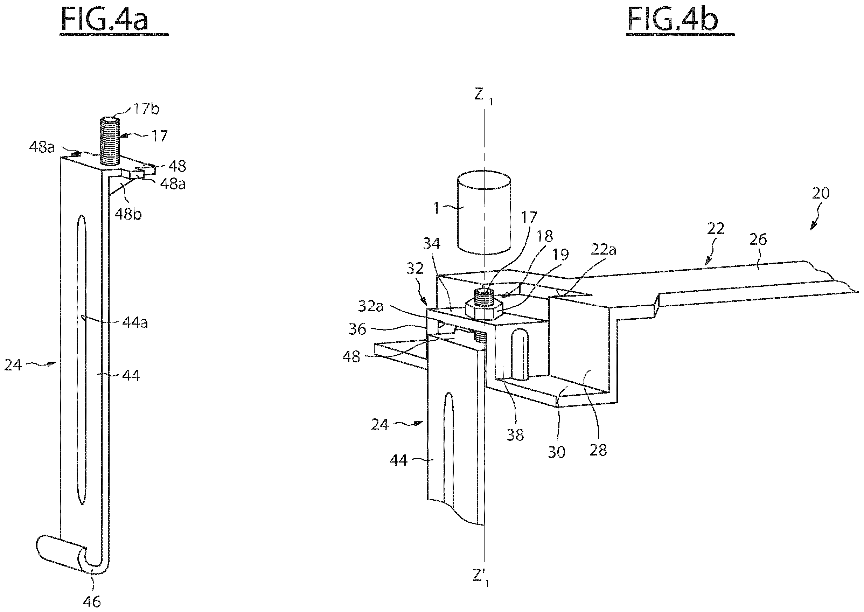

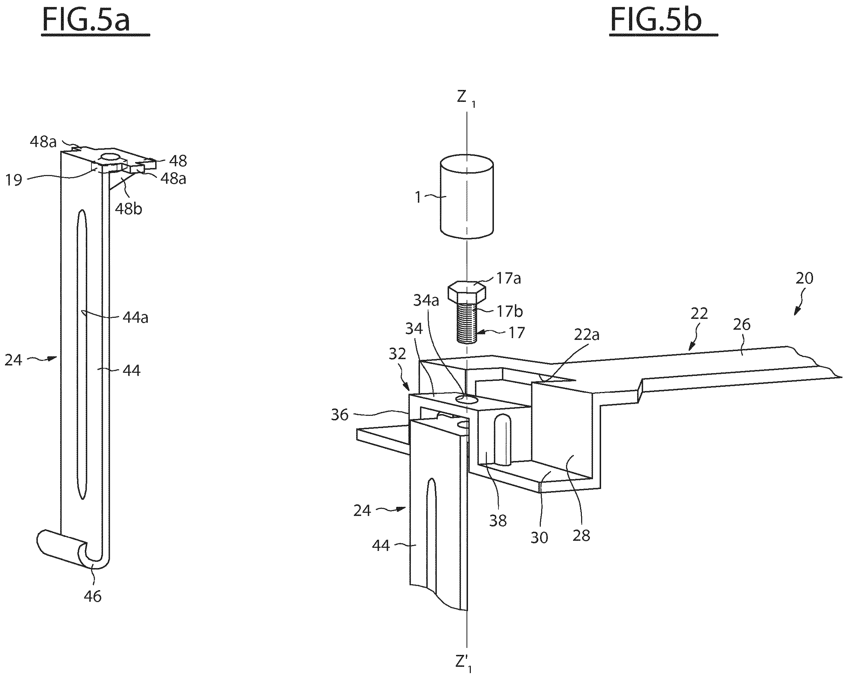

Dans tous les modes de réalisation illustrés, la bride de fixation 22 comprend une découpe 22a réalisée dans la partie centrale supérieure 26 et la partie verticale 28 afin de permettre le passage d'un outil de serrage 1 visible sur les figures 4b et 5b, pour serrer la bride de fixation 22 avec le tirant 24.

La bride de fixation 22 est réalisée, par exemple, par emboutissage d'une tôle métallique.

Le tirant 24 est réalisé, par exemple, par emboutissage d'une tôle métallique.

Le tirant 24 comporte une portion centrale 44 sensiblement verticale et plane, s'étendant entre le support de batterie 16 et la bride de fixation 22.

La portion centrale 44 comprend une première extrémité inférieure 46, recourbée vers l'extérieur sous la forme d'un crochet, fixée au support de batterie 16, notamment dans une encoche 16b adaptée. La portion centrale 44 du tirant 24 comporte en outre une deuxième extrémité supérieure 48 en équerre s'étendant suivant l'axe X-X' vers la batterie 10.

La deuxième extrémité supérieure 48 est destinée à venir se loger dans le logement intérieur 32a du caisson 32 et est fixée audit caisson 32 par le système de vis/écrou 18, l'axe Z1-Z1' dudit système de vis/écrou 18 étant contenu dans l'encombrement latéral de la batterie 10.

Tel qu'illustré, la deuxième extrémité supérieure 48 du tirant 24 comprend, sur chacun de ses côtés latéraux, un plot de guidage 48a coopérant avec la rainure de guidage 36a, 38a ; 36b, 38b correspondante.

Le tirant 24 comprend également, à titre non limitatif, un moyen de renfort 48b sous la forme d'une équerre de renfort.

Tel qu'illustré, le moyen de renfort 48b comprend deux équerres de renfort reliant chacune un côté de la deuxième extrémité supérieure 48 à la portion centrale 44. En variante, on pourrait prévoir que le moyen de renfort comprenne une unique équerre, par exemple située au centre de la deuxième extrémité supérieure 48.

Dans le mode de réalisation illustré sur les figures 4a et 4b, la vis 17 du système vis/écrou 18 est solidaire du tirant 24. La vis 17 comprend une tête de la vis 17 fixée, par exemple par soudage ou collage, sur la surface inférieure de l'extrémité supérieure en équerre 48 du tirant 24 et une partie filetée 17b s'étendant au travers de l'orifice 34a du caisson 32 au-delà de la cloison supérieure 34.

Le tirant 24 est monté dans le caisson 32 de la bride de fixation 22 par guidage des plots de guidage 48a dans les rainures correspondantes 36a, 38a ; 36b, 38b. Puis, un écrou 19 du système vis/écrou 18 est vissé par le dessus sur la partie filetée 17b de la vis 17 jusqu'à venir en appui sur la surface supérieure de la cloison supérieure 34 du caisson 32.

Le mode de réalisation illustré sur les figures 5a et 5b, dans lesquels les mêmes éléments portent les mêmes références, diffère du mode de réalisation des figures 4a et 4b uniquement par le fait que c'est l'écrou 19 du système vis/écrou 18 qui est solidaire du tirant 24. L'écrou 19 est fixé, par exemple par soudage ou collage, sur la surface inférieure de l'extrémité supérieure en équerre 48 du tirant 24.

Le tirant 24 est monté dans le caisson 32 de la bride de fixation 22 par guidage des plots de guidage 48a dans les rainures correspondantes 36a, 38a ; 36b, 38b. Puis, la vis 17 du système vis/écrou 18 est vissée par le dessus sur l'écrou 19 jusqu'à ce que la tête de vis 17a vienne en appui sur la surface supérieure de la cloison supérieure 34 du caisson 32.

Grace à la fixation de l'écrou 19 sur le tirant 24, la vis 17 est logée dans le caisson 32 et ne s'étend donc pas au-delà dudit caisson 32.

Dans ce cas, il est avantageux de prévoir une cloison inférieure 40 du caisson 32 afin de protéger le couvercle 14 de la batterie 10 de l'extrémité de la vis 17, notamment en cas d'utilisation de vis de grande dimension.

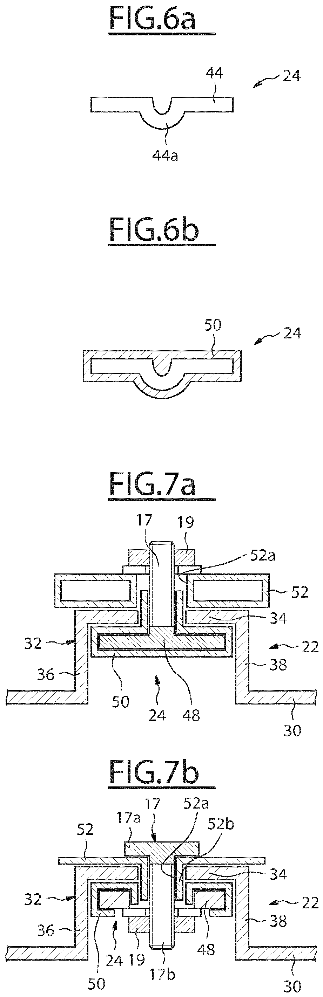

La portion centrale 44 du tirant 24, vue en coupe sur la figure 6a, comprend un renfort 44a s'étendant vers l'opposé de la face extérieure de la batterie 10. Le renfort 44a se présente ici, sous la forme d'un emboutissage créant une surépaisseur de la portion centrale 44 dirigée vers l'opposé de la face extérieure de la batterie 10.

Dans le mode de réalisation illustré sur la figure 6b, dans lequel les mêmes éléments portent les mêmes références, le tirant 24 est recouvert d'un revêtement isolant 50. Ainsi, on évite tout risque de court-circuit avec la batterie 10.

Tel qu'illustré sur les figures 7a et 7b, dans lesquelles les mêmes éléments portent les mêmes références, un dispositif isolant électriquement 52 est monté entre la bride de fixation 22 et le tirant 24, au niveau du système vis/écrou 18 et comprend un orifice traversant 52a pour le passage de la vis 17.

Dans le mode de réalisation illustré sur la figure 7a, dans lequel la vis 17 est solidaire du tirant 24, se rapportant au mode de réalisation des figures 4a et 4b, le dispositif isolant 52 est monté entre la surface supérieure de la cloison supérieure 34 du caisson 32 et l'écrou de serrage 19.

Dans le mode de réalisation illustré sur la figure 7b, dans lequel l'écrou 19 est solidaire du tirant 24, se rapportant au mode de réalisation des figures 5a et 5b, le dispositif isolant 52 est monté entre la surface supérieure de la cloison supérieure 34 du caisson 32 et la vis 17. Dans cet exemple, le dispositif isolant 52 comprend un conduit vertical 52b inséré dans l'orifice 34a du caisson 32 et dans lequel est pratiqué l'orifice traversant 52a.

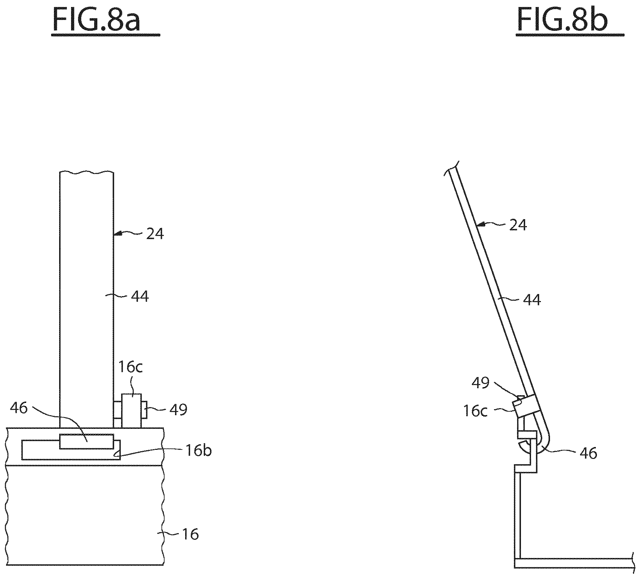

Dans le mode de réalisation illustré sur les figures 8a et 8b, dans lequel les mêmes éléments portent les mêmes références, la portion centrale 44 du tirant 24 comprend, à proximité de son extrémité inférieure 46, un ergot transversal 49 apte à coopérer avec une patte de maintien verticale 16c prévue sur le support de batterie 16.

Ainsi, le tirant 24 est retenu et ne peut pas tomber à l'horizontale, ce qui facilite le montage du dispositif de fixation 20.

Grace à la présente invention le dispositif de fixation de la batterie sur le support de batterie est particulièrement compact et ne dépasse pas ou peu de l'encombrement latéral de la batterie.

## Revendications

1. Ensemble batterie (10) 12V, support de batterie (16) et dispositif de fixation (20) de ladite batterie (10) 12V sur ledit support de batterie (16), comprenant une bride de fixation (22) entourant au moins une partie de la batterie (10), et un tirant de fixation (24) monté entre la bride de fixation (22) et le support de batterie (16) et capable de transmettre un effort de précontrainte à ladite bride de fixation (22) par un système de vis/écrou (18) d'axe vertical (Z1-Z1'), la bride de fixation (22) comprenant un caisson (32) de réception du tirant (24) et le tirant (24) comportant une première extrémité inférieure (46) fixée au support de batterie (16) et une deuxième extrémité supérieure (48) en équerre, suivant l'axe axial (X-X') de la batterie, logée dans un logement intérieur (32a) du caisson (32) et fixée audit caisson (32) par le système de vis/écrou (18), l'axe vertical (Z1-Z1') dudit système de vis/écrou (18) étant contenu dans l'encombrement latéral de la batterie (10), ledit ensemble étant **caractérisé en ce que** le caisson (32) comprend des moyens de guidage (36a, 38a ; 36b, 38b) du tirant (24) dans le logement intérieur (32a) coopérant avec des plots de guidage (48a) correspondants prévus sur ledit tirant (24).

2. Ensemble selon la revendication 1, dans lequel la bride de fixation (22) comprend une découpe (22a) permettant le passage d'un outil de serrage (1) pour serrer la bride de fixation (22) avec le tirant (24).

3. Ensemble selon l'une quelconque des revendications précédentes, dans lequel le caisson (32) se présente sous la forme d'un compartiment creux délimité au moins par une cloison supérieure (34), sensiblement plane et horizontale, et deux cloisons latérales (36, 38), sensiblement planes et verticales, s'étendant chacune à partir d'une extrémité de ladite cloison supérieure (34), les cloisons (34, 36, 38) délimitant entre elles le logement intérieur (32a) de réception du tirant (24).

4. Ensemble selon la revendication 3, dans lequel le caisson (32) comprend une cloison inférieure (40), sensiblement horizontale et plane, reliée aux cloisons latérales (36, 38).

5. Ensemble selon l'une quelconque des revendications 3 à 4, dans lequel la cloison supérieure (34) du caisson (32) comprend un orifice traversant (34a), d'axe (Z1-Z1'), de réception d'une vis de fixation (17) du système de vis/écrou (18).

6. Ensemble selon la revendication 5, dans lequel le système vis/écrou (18) comprend la vis de fixation (17) solidaire du tirant (24) et un écrou (19) vissé sur ladite vis (17), ladite vis (17) comprenant une tête (17a) de la vis (17) fixée sur la surface inférieure de l'extrémité supérieure en équerre (48) du tirant (24) et une partie filetée (17b) s'étendant au travers de l'orifice (34a) du caisson (32) au-delà de la cloison supérieure (34) et coopérant avec l'écrou (19).

7. Ensemble selon la revendication 5, dans lequel le système vis/écrou (18) comprend la vis de fixation (17) et un écrou (19) solidaire du tirant (24), ledit écrou (19) étant fixé sur la surface inférieure de l'extrémité supérieure en équerre (48) du tirant (24) et coopérant par vissage avec la vis (17).

8. Ensemble selon la revendication 1, dans lequel les moyens de guidage (36a, 38a ; 36b, 38b) du caisson (32) comprennent au moins deux zones embouties vers l'extérieur du caisson (32) formant respectivement une rainure sensiblement verticale (36a, 38a).

9. Ensemble selon la revendication 8, dans lequel les moyens de guidage (36a, 38a ; 36b, 38b) du caisson (32) comprennent deux zones (36b, 38b) supplémentaires embouties vers l'extérieur du caisson (32) formant respectivement une rainure sensiblement horizontale (36b, 38b) prolongée par la rainure sensiblement verticale (36a, 38a).

10. Ensemble selon la revendication 3 et l'une quelconque des revendications 8 ou 9, dans lequel les moyens de guidage (36a, 38a ; 36b, 38b) sont pratiqués sur chacune des cloisons latérales (36, 38).

11. Ensemble selon l'une quelconque des revendications précédentes, dans lequel le tirant (24) comporte une portion centrale (44) sensiblement verticale et plane, s'étendant entre le support de batterie (16) et la bride de fixation (22), la portion centrale (44) comprenant la première extrémité inférieure (46), recourbée vers l'extérieur sous la forme d'un crochet, fixée au support de batterie (16), et la deuxième extrémité supérieure (48) en équerre s'étendant suivant l'axe axial (X-X') vers la batterie (10).

12. Ensemble selon la revendication 11 et l'une quelconque des revendications 8 à 10, dans lequel la deuxième extrémité supérieure (48) du tirant (24) comprend, sur chacun de ses côtés latéraux, un plot de guidage (48a) coopérant avec la rainure de guidage (36a, 38a ; 36b, 38b) correspondante.

13. Ensemble selon l'une quelconque des revendications précédentes, dans lequel le tirant (24) est recouvert d'un revêtement isolant (50).

14. Ensemble selon l'une quelconque des revendications précédentes, comprenant un dispositif isolant électriquement (52) monté entre la bride de fixation (22) et le tirant (24), au niveau du système vis/écrou (18), et comprenant un orifice traversant (52a) pour le passage de la vis (17).

15. Ensemble selon les revendications 6 et 14, dans lequel le dispositif isolant (52) est monté entre la surface supérieure de la cloison supérieure (34) du caisson (32) et l'écrou de serrage (19).

16. Ensemble selon les revendications 6 et 14, dans lequel le dispositif isolant (52) est monté entre la surface supérieure de la cloison supérieure (34) du caisson (32) et la vis (17).

17. Ensemble selon l'une quelconque des revendications précédentes, dans lequel le tirant (24) comprend, à proximité de son extrémité inférieure (46), un ergot transversal (49) apte à coopérer avec une patte de maintien verticale (16c) prévue sur le support de batterie (16).

18. Ensemble selon l'une quelconque des revendications précédentes, dans lequel la bride de fixation (22) comprend une partie centrale supérieure (26), sensiblement horizontale et plane, disposée au-dessus de la batterie (10), tout en laissant subsister un jeu vertical (ΔZ) avec la surface supérieure de ladite batterie (10), une partie verticale (28) s'étendant à partir de chacune des extrémités de la partie centrale (26) verticalement vers une surface latérale (14b, 14c) correspondante de la batterie (10), chacune des parties verticales (28) étant en regard d'une surface verticale (14d, 14e) correspondante de la batterie (10) et étant prolongée par une partie latérale inférieure (30), sensiblement horizontale et plane, en appui sur la surface latérale (14b, 14c) de la batterie (10), le caisson (32) de réception du tirant (24) étant réalisé sur chacune des parties latérales inférieures (30) de la bride de fixation (22).

19. Ensemble selon les revendications 2 et 18, dans lequel la découpe (22a) est réalisée dans la partie centrale supérieure (26) et la partie verticale (28) de la bride de fixation (22).

20. Ensemble selon l'une quelconque des revendications précédentes, dans lequel au moins l'un de la bride de fixation (22) et du tirant (24) est réalisé par emboutissage d'une tôle métallique.

21. Véhicule automobile comprenant un ensemble selon l'une quelconque des revendications précédentes.

## Patentansprüche

1. Anordnung aus einer 12V-Batterie (10), einem Batteriehalter (16) und einer Vorrichtung zur Befestigung (20) der 12V-Batterie (10) auf dem Batteriehalter (16), beinhaltend einen Befestigungsbügel (22), der mindestens einen Teil der Batterie (10) umgibt, und eine Befestigungszugstange (24), die zwischen dem Befestigungsbügel (22) und dem Batteriehalter (16) montiert ist und dazu fähig ist, durch ein Schraube-Mutter-System (18) mit vertikaler Achse (Z1-Z1') eine Vorspannkraft auf den Befestigungsbügel (22) zu übertragen, wobei der Befestigungsbügel (22) einen Kasten (32) zur Aufnahme der Zugstange (24) beinhaltet und die Zugstange (24) ein erstes, unteres Ende (46), das an dem Batteriehalter (16) befestigt ist, und ein gemäß der axialen Achse (X-X') der Batterie abgewinkeltes zweites, oberes Ende (48), das in einer Innenaufnahme (32a) des Kastens (32) aufgenommen und durch das Schraube-Mutter-System (18) an dem Kasten (32) befestigt ist, umfasst, wobei die vertikale Achse (Z1-Z1') des Schraube-Mutter-Systems (18) in dem seitlichen Bauraum der Batterie (10) enthalten ist, wobei die Anordnung **dadurch gekennzeichnet ist, dass** der Kasten (32) Mittel zum Führen (36a, 38a; 36b, 38b) der Zugstange (24) in der Innenaufnahme (32a) beinhaltet, die mit entsprechenden Führungselementen (48a), die an der Zugstange (24) vorgesehen sind, zusammenwirken.

2. Anordnung nach Anspruch 1, wobei der Befestigungsbügel (22) eine Aussparung (22a) beinhaltet, die den Durchgang eines Spannwerkzeugs (1) gestattet, um den Befestigungsbügel (22) mit der Zugstange (24) zu spannen.

3. Anordnung nach einem der vorhergehenden Ansprüche, wobei der Kasten (32) die Form eines hohlen Gehäuses aufweist, das mindestens durch eine obere Wand (34), die im Wesentlichen eben und horizontal ist, und zwei Seitenwände (36, 38), die im Wesentlichen eben und vertikal sind und sich jeweils von einem Ende der oberen Wand (34) erstrecken, begrenzt wird, wobei die Wände (34, 36, 38) zwischen sich die Innenaufnahme (32a) zur Aufnahme der Zugstange (24) begrenzen.

4. Anordnung nach Anspruch 3, wobei der Kasten (32) eine untere Wand (40) beinhaltet, die im Wesentlichen horizontal und eben ist und mit den Seitenwänden (36, 38) verbunden ist.

5. Anordnung nach einem der Ansprüche 3 bis 4, wobei die obere Wand (34) des Kastens (32) eine Durchgangsbohrung (34a) mit einer Achse (Z1-Z1') zur Aufnahme einer Befestigungsschraube (17) des Schraube-Mutter-Systems (18) beinhaltet.

6. Anordnung nach Anspruch 5, wobei das Schraube-Mutter-System (18) die Befestigungsschraube (17), die mit der Zugstange (24) fest verbunden ist, und eine Mutter (19), die auf die Schraube (17) aufgeschraubt wird, beinhaltet, wobei die Schraube (17) einen Kopf (17a) der Schraube (17), der an der unteren Oberfläche des abgewinkelten oberen Endes (48) der Zugstange (24) befestigt ist, und einen Gewindeteil (17b), der sich durch die Bohrung (34a) des Kastens (32) bis über die obere Wand (34) hinaus erstreckt und mit der Mutter (19) zusammenwirkt, beinhaltet.

7. Anordnung nach Anspruch 5, wobei das Schraube-Mutter-System (18) die Befestigungsschraube (17) und eine Mutter (19), die mit der Zugstange (24) fest verbunden ist, beinhaltet, wobei die Mutter (19) an der unteren Oberfläche des abgewinkelten oberen Endes (48) der Zugstange (24) befestigt ist und mit der Schraube (17) durch Verschrauben zusammenwirkt.

8. Anordnung nach Anspruch 1, wobei die Führungsmittel (36a, 38a; 36b, 38b) des Kastens (32) mindestens zwei zur Außenseite des Kastens (32) tiefgezogene Bereiche beinhalten, die jeweils eine im Wesentlichen vertikale Nut (36a, 38a) bilden.

9. Anordnung nach Anspruch 8, wobei die Führungsmittel (36a, 38a; 36b, 38b) des Kastens (32) zwei zur Außenseite des Kastens (32) tiefgezogene zusätzliche Bereiche (36b, 38b) beinhalten, die jeweils eine im Wesentlichen horizontale Nut (36b, 38b) bilden, die durch die im Wesentlichen vertikale Nut (36a, 38a) verlängert wird.

10. Anordnung nach Anspruch 3 und einem der Ansprüche 8 oder 9, wobei die Führungsmittel (36a, 38a; 36b, 38b) an jeder der Seitenwände (36, 38) eingebracht sind.

11. Anordnung nach einem der vorhergehenden Ansprüche, wobei die Zugstange (24) einen im Wesentlichen vertikalen und ebenen Mittelabschnitt (44) umfasst, der sich zwischen dem Batteriehalter (16) und dem Befestigungsbügel (22) erstreckt, wobei der Mittelabschnitt (44) das erste, untere Ende (46), das in Form eines Hakens nach außen gekrümmt ist und an dem Batteriehalter (16) befestigt ist, und das abgewinkelte zweite, obere Ende (48), das sich gemäß der axialen Achse (X-X') zu der Batterie (10) erstreckt, beinhaltet.

12. Anordnung nach Anspruch 11 und einem der Ansprüche 8 bis 10, wobei das zweite, obere Ende (48) der Zugstange (24) an jeder seiner seitlichen Seiten ein Führungselement (48a) beinhaltet, das mit der entsprechenden Führungsnut (36a, 38a; 36b, 38b) zusammenwirkt.

13. Anordnung nach einem der vorhergehenden Ansprüche, wobei die Zugstange (24) mit einer Isolierbeschichtung (50) überzogen ist.

14. Anordnung nach einem der vorhergehenden Ansprüche, die eine elektrisch isolierende Vorrichtung (52) beinhaltet, die im Bereich des Schraube-Mutter-Systems (18) zwischen dem Befestigungsbügel (22) und der Zugstange (24) montiert ist und eine Durchgangsbohrung (52a) für den Durchgang der Schraube (17) beinhaltet.

15. Anordnung nach den Ansprüchen 6 und 14, wobei die isolierende Vorrichtung (52) zwischen der oberen Oberfläche der oberen Wand (34) des Kastens (32) und der Spannmutter (19) montiert ist.

16. Anordnung nach den Ansprüchen 6 und 14, wobei die isolierende Vorrichtung (52) zwischen der oberen Oberfläche der oberen Wand (34) des Kastens (32) und der Schraube (17) montiert ist.

17. Anordnung nach einem der vorhergehenden Ansprüche, wobei die Zugstange (24) in der Nähe ihres unteren Endes (46) eine quer ausgerichtete Nase (49) beinhaltet, die dazu fähig ist, mit einer vertikalen Haltelasche (16c), die an dem Batteriehalter (16) vorgesehen ist, zusammenzuwirken.

18. Anordnung nach einem der vorhergehenden Ansprüche, wobei der Befestigungsbügel (22) einen im Wesentlichen horizontalen und ebenen oberen Mittelteil (26) beinhaltet, der oberhalb der Batterie (10) angeordnet ist, wobei aber ein vertikales Spiel (ΔZ) zu der oberen Oberfläche der Batterie (10) verbleibt, wobei sich ein vertikaler Teil (28) von jedem der Enden des Mittelteils (26) vertikal zu einer entsprechenden seitlichen Oberfläche (14b, 14c) der Batterie (10) erstreckt, wobei jeder der vertikalen Teile (28) einer entsprechenden vertikalen Oberfläche (14d, 14e) der Batterie (10) zugewandt ist und durch einen im Wesentlichen horizontalen und ebenen unteren seitlichen Teil (30), der auf der seitlichen Oberfläche (14b, 14c) der Batterie (10) aufliegt, verlängert wird, wobei der Kasten (32) zur Aufnahme der Zugstange (24) an jedem der unteren seitlichen Teile (30) des Befestigungsbügels (22) ausgeführt ist.

19. Anordnung nach den Ansprüchen 2 und 18, wobei die Aussparung (22a) in dem oberen Mittelteil (26) und dem vertikalen Teil (28) des Befestigungsbügels (22) ausgeführt ist.

20. Anordnung nach einem der vorhergehenden Ansprüche, wobei mindestens eines von dem Befestigungsbügel (22) und der Zugstange (24) durch Tiefziehen eines Metallblechs ausgeführt ist.

21. Kraftfahrzeug, das eine Anordnung nach einem der vorhergehenden Ansprüche beinhaltet.

## Claims

1. 12V battery assembly (10), battery support (16) and device (20) for fastening said 12V battery (10) to said battery support (16), comprising a fastening clamp (22) surrounding at least a part of the battery (10), and a fastening tie bar (24) that is mounted between the fastening clamp (22) and the battery support (16) and is capable of transmitting a prestress load to said fastening clamp (22) by a screw/nut system (18) of vertical axis (Z1-Z1'), the fastening clamp (22) comprising a box (32) for receiving the tie bar (24), and the tie bar (24) having a first, lower end (46) fastened to the battery support (16) and a second, bracket-shaped upper end (48), along the axial axis (X-X') of the battery, that is housed in an interior housing (32a) of the box (32) and is fastened to said box (32) by the screw/nut system (18), the vertical axis (Z1-Z1') of said screw/nut system (18) being contained in the lateral dimensions of the battery (10), said assembly being **characterized in that** the box (32) comprises means (36a, 38a; 36b, 38b) for guiding the tie bar (24) in the interior housing (32a) that engage with corresponding guide lugs (48a) provided on said tie bar (24).

2. Assembly according to Claim 1, wherein the fastening clamp (22) comprises a cutout (22a) for the passage of a clamping tool (1) for clamping the fastening clamp (22) to the tie bar (24).

3. Assembly according to either one of the preceding claims, wherein the box (32) is in the form of a hollow compartment delimited at least by an upper wall (34), which is substantially planar and horizontal, and two lateral walls (36, 38), which are substantially planar and vertical, each extending from one end of said upper wall (34), the walls (34, 36, 38) delimiting between one another the interior housing (32a) for receiving the tie bar (24).

4. Assembly according to Claim 3, wherein the box (32) comprises a lower wall (40), which is substantially horizontal and planar and connected to the lateral walls (36, 38).

5. Assembly according to either one of Claims 3 and 4, wherein the upper wall (34) of the box (32) comprises a through-orifice (34a), of axis (Z1-Z1'), for receiving a fastening screw (17) of the screw/nut system (18).

6. Assembly according to Claim 5, wherein the screw/nut system (18) comprises the fastening screw (17), secured to the tie bar (24), and a nut (19) screwed to said screw (17), said screw (17) comprising a head (17a) of the screw (17) that is fastened to the lower surface of the bracket-shaped upper end (48) of the tie bar (24), and a threaded part (17b) that extends through the orifice (34a) in the box (32) beyond the upper wall (34) and engages with the nut (19).

7. Assembly according to Claim 5, wherein the screw/nut system (18) comprises the fastening screw (17) and a nut (19) secured to the tie bar (24), said nut (19) being fastened to the lower surface of the bracket-shaped upper end (48) of the tie bar (24) and being screwed together with the screw (17).

8. Assembly according to Claim 1, wherein the guide means (36a, 38a; 36b, 38b) of the box (32) comprise at least two zones stamped toward the exterior of the box (32), forming in each case a substantially vertical slot (36a, 38a).

9. Assembly according to Claim 8, wherein the guide means (36a, 38a; 36b, 38b) of the box (32) comprise two additional zones (36b, 38b) stamped toward the exterior of the box (32), forming in each case a substantially horizontal slot (36b, 38b) extended by the substantially vertical slot (36a, 38a).

10. Assembly according to Claim 3 and either one of Claims 8 and 9, wherein the guide means (36a, 38a; 36b, 38b) are made in each of the lateral walls (36, 38).

11. Assembly according to any one of the preceding claims, wherein the tie bar (24) has a substantially vertical and planar central portion (44) extending between the battery support (16) and the fastening clamp (22), the central portion (44) comprising the first, lower end (46), which is curved toward the outside in the form of a hook and fastened to the battery support (16), and the second, bracket-shaped upper end (48) extending along the axial axis (X-X') toward the battery (10).

12. Assembly according to Claim 11 and any one of Claims 8 to 10, wherein the second, upper end (48) of the tie bar (24) comprises, on each of its lateral sides, a guide lug (48a) engaging with the corresponding guide slot (36a, 38a; 36b, 38b).

13. Assembly according to any one of the preceding claims, wherein the tie bar (24) is covered with an insulating coating (50).

14. Assembly according to any one of the preceding claims, comprising an electrically insulating device (52) that is mounted between the fastening clamp (22) and the tie bar (24), in the region of the screw/nut system (18), and comprises a through-orifice (52a) for the passage of the screw (17).

15. Assembly according to Claims 6 and 14, wherein the insulating device (52) is mounted between the upper surface of the upper wall (34) of the box (32) and the clamping nut (19).

16. Assembly according to Claims 6 and 14, wherein the insulating device (52) is mounted between the upper surface of the upper wall (34) of the box (32) and the screw (17).

17. Assembly according to any one of the preceding claims, wherein the tie bar (24) comprises, in the vicinity of its lower end (46), a transverse protrusion (49) that is able to engage with a vertical holding tab (16c) provided on the battery support (16).

18. Assembly according to any one of the preceding claims, wherein the fastening clamp (22) comprises an upper central part (26), which is substantially horizontal and planar and disposed above the battery (10), while leaving a vertical clearance (ΔZ) with respect to the upper surface of said battery (10), a vertical part (28) extending vertically from each of the ends of the central part (26) toward a corresponding lateral surface (14b, 14c) of the battery (10), each of the vertical parts (28) being next to a corresponding vertical surface (14d, 14e) of the battery (10) and being extended by a lower lateral part (30), which is substantially horizontal and planar, resting on the lateral surface (14b, 14c) of the battery (10), the box (32) for receiving the tie bar (24) being made on each of the lower lateral parts (30) of the fastening clamp (22).

19. Assembly according to Claims 2 and 18, wherein the cutout (22a) is made in the upper central part (26) and the vertical part (28) of the fastening clamp (22).

20. Assembly according to any one of the preceding claims, wherein at least one of the fastening clamp (22) and the tie bar (24) is made by stamping a metal sheet.

21. Motor vehicle comprising an assembly according to any one of the preceding claims.
